# EUROPÄISCHE PATENTSCHRIFT

(11) **EP 0 925 902 B1**
(45) Veröffentlichungstag und Bekanntmachung des Hinweises auf die Patenterteilung: **12.02.2003**
(21) Anmeldenummer: 98123280.4
(22) Anmeldetag: 07.12.1998
(51) Int. Cl.: B29C 45/28

(54) **Spritzgusswerkzeug**
Injection mould
Moule d'injection

(30) Priorität: 23.12.1997 DE 19757412
(43) Veröffentlichungstag der Anmeldung: 30.06.1999
(73) Patentinhaber: SysTec Komplettsysteme GmbH, 72754 Bad Urach (DE)
(72) Erfinder: Döbler, Walter, 72574 Bad Urach-Seeburg (DE)
(74) Vertreter: Kohl, Karl-Heinz

(56) Entgegenhaltungen:
- EP-A- 0 407 683
- EP-A- 0 714 748
- DE-C- 19 608 676
- FR-A- 2 641 227
- US-A- 4 832 593

## Beschreibung

Die Erfindung betrifft ein Spritzgußwerkzeug nach dem Oberbegriff des Anspruches 1.

Ein solches Spritzgußwerkzeug ist aus der DE-A-196 08 676 bekannt. Die Verschlußnadel wird mittels eines als Magnetscheibe ausgebildeten Antriebselementes verstellt, das durch einen Elektromagnet-Antrieb betätigt wird. Ein topfartiges Magnetgehäuse liegt unmittelbar an der Außenseite des Heißkanalverteilerblockes an. Beim Spritzgußvorgang strömt die flüssige Kunststoffmasse durch den Heißkanalverteilerblock über einen Zulaufkanal in eine Zentralbohrung, in welcher sich die Verschlußnadel befindet. Da die Kunststoffmasse heiß ist, treten am Übergang vom Heißkanalverteilerblock zum Düsenhalter Wärmeprobleme auf. Sie können die Funktionsweise des Spritzgußwerkzeuges beeinträchtigen.

Es ist ein weiteres Spritzgußwerkzeug aus der US-A-5 533 882 bekannt. Bei dieser Vorrichtung sitzt ein Düsenhalter unmittelbar auf dem Heißkanalverteiler auf, wobei ein Verteilerkanal mit einem Zuführkanal im Düsenhalter unmittelbar in Verbindung steht. An dem dem Heißkanalverteilerblock abgewandten Ende des Düsenhalters ist die Düse angeordnet. Der Zuführkanal geht an dieser Stelle in die Düsenöffnung über, die durch eine Verschlußnadel verschlossen und geöffnet werden kann. Die Verschlußnadel ist axial verschiebbar in dem Düsenhalter gehalten. Die Bewegung der Düsennadel wird durch einen hülsenförmigen Kolben erzeugt, der koaxial um den Düsenhalter herum angeordnet ist. Der Kolbenraum wird von einer den Düsenhalter umgebenden Hülse und einer Verschlußplatte gebildet. Damit die Nadel mit dem Kolben in Verbindung steht, muß über eine relativ aufwendige Jochkonstruktion die Nadel mit dem Kolben durch einen seitlichen Durchbruch verbunden werden. Zwar wird durch einen solchen Aufbau bereits ein kavitätseitiger Nadelverschluß erzeugt, jedoch ist dieser relativ kompliziert im Aufbau, so daß Verbesserungen wünschenswert sind.

Üblicherweise wurden bislang immer Nadelverschlußkonstruktionen bei den auf dem Heißkanalverteilerblock sitzenden Düsenhaltern angewandt, die eine durch den Heißkanalverteilerblock hindurchgeführte Verschlußnadel aufwiesen. Der Kolben zur Steuerung der Verschlußnadel war dann in einer separaten Einrichtung an der Rückseite des Heißkanalverteilerblocks vorgesehen. Eine solche Konstruktion bedingte aber immer eine relativ lange Verschlußnadel, wodurch die Konstruktiv relativ aufwendig und teuer wurde. Eine solche Konstruktion ist zum Beispiel aus der EP 0 647 514 A1 bekannt.

Bei einer weiteren Konstruktion wurde der Heißkanalverteilerblock in einen Hauptheißkanalverteilerblock und in kältere Einzelblöcke unterteilt. Zwar konnten dort die Kolbeneinheiten in den kühleren Einzelblöcken untergebracht werden, jedoch war ein Verbindungskanal zwischen dem Hauptheißkanalverteilerblock und dem auf dem Einzelblock sitzenden Düsenhalter erforderlich, der weniger stark beheizt werden konnte. Auch dieser Aufbau ist relativ kompliziert und teuer, da zusätzliche Bauelemente vonnöten sind. Des weiteren konnte es bei einer solchen Ausführungsform zu Temperaturführungsproblemen kommen. Eine solche Vorrichtung ist zum Beispiel aus der EP 0 374 353 A2 bekannt.

Der Erfindung liegt die Aufgabe zugrunde, das gattungsgemäße Spritzgußwerkzeug so auszubilden, daß die vom Heißkanalverteilerblock abgestrahlte Wärme den Spritzgußvorgang nicht beeinträchtigt.

Diese Aufgabe wird beim gattungsgemäßen Spritzgußwerkzeug erfindungsgemäß mit den kennzeichnenden Merkmalen des Anspruches 1 gelöst.

Beim erfindungsgemäßen Spritzgußwerkzeug übt die vom Heißkanalverteilerblock abgestrahlte Wärme auf das Fluid bzw. das Innere der Kolbenkammer nur wenig Einfluß aus, da die Isolierscheibe die Oberfläche des Heißkanalverteilerblockes zur Kolbenkammer hin abdeckt. Dadurch kommt es zu einer starken Temperaturreduzierung im Inneren der Kolbenkammer, wodurch die Funktion der fluidbetriebenen Kolbeneinheit verbessert wird. Auf diese Weise ist eine einwandfreie Funktion der Verschlußnadel gewährleistet. Hinzu kommt, daß die Isolierscheibe auch eine Dichtungsfunktion ausüben kann, was zur optimalen Funktion der Verschlußnadel beiträgt.

Ein weiterer Vorteil besteht darin, den Kolben als beweglichen Bestandteil des Düsenhalters auszubilden und unmittelbar im Warmbereich anzuordnen. Offenbar bestanden bislang im Stand der Technik Vorbehalte gegenüber einer Anordnung des Kolbens unmittelbar in der Nähe des Heißkanalverteilerblocks. Bei dieser Lösung kann mit äußerst kurzen Verschlußnadellängen gearbeitet werden. Darüber hinaus ist der Aufbau von Verschlußnadel und Kolben weniger aufwendig als bei bereits bekannten kavitätseitigen Nadelverschlüssen. Hierin besteht auch ein wesentlicher Vorteil bei der Montage und Demontage des erfindungsgemäßen Spritzgußwerkzeuges, da eine Demontage von außen nach innen ohne direkten Zugriff auf den Heißkanalverteilerblock möglich ist. Hierdurch ist auch eine Konstruktion bereitgestellt, die mit weitaus weniger Bauteilen als im Stand der Technik auskommt. Nicht zuletzt wird hierdurch die Bauhöhe des gesamten Werkzeuges sowie der gesamte Platzbedarf erheblich verringert. Der Düsenhalter kann ohne weiteres mehrteilig aufgebaut sein und über Zwischenstücke auf dem Heißkanalverteilerblock aufsitzen. Eine wesentliche Vereinfachung der Montage und Demontage des Spritzgußwerkzeuges ist bei einer Ausführungsform dadurch gegeben, daß der Düsenhalter einen Rückseitenbereich aufweist, mit dem er auf dem Heißkanalverteilerblock aufsitzt, die Kolbenkammer an dem Rückseitenbereich des Düsenhalters offen ist und die Kolbenkammer am Rückseitenbereich durch den Heißkanalverteilerblock verschlossen Ist Der Kolben ist hierdurch einschließlich Nadel von der Rückseite des Düsenhalters her einführbar und entnehmbar. Ein zusätzlicher Verschluß muß nicht vorgesehen sein, da eine Wand der Kolbenkammer durch die Oberfläche des Heißkanalverteilerblocks definiert wird.

Eine weitere Verbesserung der Kompaktheit der gesamten Vorrichtung kann dadurch erzielt werden, wenn sich der mindestens eine Zuführkanal durch die Kolbenkammer und den Kolben erstreckt, wobei der Kolben mindestens einen entsprechenden Durchbruch aufweist. Es muß also keine Querschnittsvergrößerung des Düsenhalters vorgenommen werden, um die flüssige Kunststoffmasse vom Verteilerkanal in den Zuführkanal zu überführen. Den mindestens einen Zuführkanal unmittelbar durch die Kolbenkammer zu legen, ist im Stand der Technik bisher unbekannt.

Bevorzugt kann versetzt zur Verschlußnadel mindestens ein dickwandiges, mit dem Düsenhalter verbundenes Anschlußstück, im wesentlichen achsparallel in die Kolbenkammer hineinragen, der Zuführkanal durch das Anschlußstück verlaufen und das Anschlußstück eine Stimseite aufweisen, mit der es mit dem Heißkanalverteilerblock derart in Verbindung steht, daß der Zuführkanal mit einem Verteilerkanal verbunden ist. Durch das unmittelbare Aufsetzen der Anschlußstücke auf den Heißkanalverteilerblock wird auch der mindestens eine Zuführkanal ausreichend mitbeheizt Durch die Dickwandigkeit des Anschlußstückes wird diese Wärme auch ausreichend beibehalten und das in die Kolbenkammer strömende Fluid hat hierauf nur unwesentlichen Einfluß. Es besteht aber auch die Möglichkeit, das Fluid entsprechend vorzuwärmen.

Des weiteren kann das Anschlußstück auch als Kolbenführung dienen. Hierzu ist der mindestens ein entsprechender Durchbruch im Kolben formschlüssig an die Außenkontur des Anschlußstückes derart angepaßt, daß der Kolben auf dem Anschlußstück gleitet. Eine formschlüssige Anformung ist auch notwendig, damit keine Leckageströmung des Fluids von der einen auf die andere Kolbenseite erfolgen kann. Die Durchbrüche im Kolben können auch mit geeigneten Dichtringen versehen sein, die an der Außenkontur des Anschlußstückes entlang gleiten.

Um für die meisten Anwendungsfälle möglichst wenig Einfluß der von dem Heißkanalverteilerblock abgestrahlten Wärme auf das Fluid bzw. das Innere der Kolbenkammer zu bekommen, kann weiter vorgesehen sein, daß zwischen Heißkanalverteilerblock und Kolbenkammer eine hochtemperaturbeständige Isolierscheibe, bevorzugt aus einem hochtemperaturbeständigen Kunststoff, angeordnet ist, die die Oberfläche des Heißkanalverteilerblocks zur Kolbenkammer hin abdeckt. Hierdurch kommt es zu einer starken Temperaturreduzierung im Innern der Kolbenkammer und die Funktion der fluidbetriebenen Kolbeneinheit ist verbessert.

Vorteilhafterweise kann die Isolierscheibe an ihrem Außenumfang bündig in einer Ausformung des Düsenhalters aufgenommen sein und mindestens einen formgenauen Durchspruch für das mindestens eine Anschlußstück aufweisen. Hierdurch ist der gesamte Querschnitt der Kolbenkammer gegenüber im Heißkanalverteilerblock abgedeckt Darüber hinaus kann die Isolierscheibe auch eine Dichtfunktion ausüben.

Als bevorzugter Werkstoff hat sich gemäß einer Ausführungsform ein Polyimid für die Isolierscheibe herausgestellt, das bevorzugt eine Formbeständigkeit bei 2 MPa bis ca. 360°C aufweist. Ein derartiger Werkstoff hält den relativ hohen Temperaturen am Heißkanalverteilerblock stand, ohne daß die Isolier- bzw. Dichtwirkung herabgesetzt würde.

Damit die Isolierscheibe auch in axialer Richtung genau positionierbar ist, kann das mindestens eine Anschlußstück an seinem Stirnseitenbereich im Umfang reduziert sein und dieser reduzierte Umfangsbereich als Steckansatz zum formgenauen Einstecken in den mindestens einen Durchbruch der Isolierscheibe ausgebildet sein, wobei der Steckansatz zum restlichen Anschlußstück eine Anschlagkante für die Isolierscheibe bildet. Die Isolierscheibe muß dabei soweit auf das Anschlußstück aufsteckbar sein, daß die Stimseite des Anschlußstückes mit dem Heißkanalverteilerblock zur Anlage kommt. Bevorzugt kann eine Isolierscheibe mit einer Dicke von ca. 2 mm vorgesehen sein, so daß der Steckansatz entsprechend lang sein muß. Eine weitere Steigerung der Kompaktheit ist bei einer Ausführungsform gegeben, bei der der Kolben eine Vorder- und eine Rückseite aufweist und daß in dem Düsenhalter Fluidkanäle angeordnet sind, wobei mindestens ein Fluidkanal derart in die Kolbenkammer mündet, daß er der Rückseite des Kolbens zugeordnet ist, und mindestens ein Fluidkanal derart in die Kolbenkammer mündet, daß er der Vorderseite des Kolbens zugeordnet ist Hierdurch läßt sich der Kolben in der Kolbenkammer durch entsprechende Druckbeaufschlagung zugehöriger Fluidkanäle hin- und herbewegen.

Günstigerweise kann der Fluidanschluß an dem Düsenhalter im Abstand zum Heißkanalverteilerblock angeordnet sein und der mindestens eine Fluidkänal, der der Rückseite des Kolbens zugeordnet ist, sich durch das Anschlußstück erstrecken. Die Fluidführung erfolgt demnach immer im Abstand zum Heißkanalverteilerblock, so daß dieser möglichst wenig Einfluß auf das Fluid nimmt Die Zuführrichtung des Fluids erfolgt innerhalb des Düsenhalters entgegen der Strömungsrichtung des Kunststoffmaterials, wodurch das Fluid möglichst weit von der Heißstelle entfernt ist.

Damit der dem Anschlußstück zugeordnete Fluidkanal ohne Störeinflüsse das Fluid in die Kolbenkammer einleiten kann, ist weiter vorgesehen, daß der mindestens eine Fluidkanal, der der Rückseite des Kolbens zugeordnet ist, im Bereich der Anschlagkante für die Isolierscheibe der Kolbenkammer mündet, wobei die Anschlagkante in diesem Bereich eine Hinterschneidung für einen durch die Isolierscheibe ungehinderten Austritt oder Eintritt des Fluids aufweist. Die Hinterschneidung sorgt demnach für einen Abstand zumindest des einen Bereichs des Austrittsendes des Fluidkanals zur Isolierscheibe. Diese Maßnahme sorgt ebenfalls für einen sehr kompakten Aufbau des gesamten Werkzeugs.

Da der Kolben in einer relativ warmen Umgebung arbeitet, kann dieser vorteilhaft als zylindrischer Pneumatikkolben ausgebildet sein. Die Handhabung von Luft ist in relativ warmer Umgebung wesentlich einfacher.

Um die Funktionsfähigkeit des Kolbens zu verbessern und den Verschleiß zu minimieren, kann der Kolben an seinem Außenumfang mindestens einen wärmebeständigen Gleitring aufweisen, der mit der Gleitfläche der Kolbenkammer in Berührung steht. Solche Gleitringe sind im Stand der Technik bestens bekannt und auch für Warmeinsätze geeignet. Eine Leckageströmung zwischen der Vorder- und der Rückseite des Kolbens wird auch bei höheren Temperaturen durch den geeigneten Gleitring verhindert

Damit ein sicheres Anfahren des Kolbens auch aus den Extremstellungen heraus immer sichergestellt ist, kann die Vorderseite und die Rückseite des Kolbens jeweils zurückversetzte Bereiche aufweisen, die derart angeordnet sind, daß die Fluidkanäle im Bereich der zurückversetzten Bereiche in die Kolbenkammer münden. Hierdurch wird im Mündungsbereich der Kolben immer ein Hohlraum erzeugt, selbst wenn die Vorder- bzw. Rückseite des Kolbens jeweils bündig an den Stirnseiten der Kolbenkammer anliegt. Eine ausreichende Kraft zum Anfahren des Kolbens ist somit leicht aufbringbar.

Des weiteren bezieht sich die Erfindung auf eine Ausführungsform, für die auch gesondert Schutz begehrt wird. Diese zeichnet sich dadurch aus, daß der Kolben aus zwei miteinander verbundenen Kolbenscheiben gebildet ist und die Verschlußnadel an dem Ende, das dem Kolben zugeordnet ist, einen Befestigungskopf aufweist, der an einer Rückseite der ersten Kolbenscheibe anliegt und durch eine Vorderseite der zweiten Kolbenseite in einer im Innern des Kolbens angeordneten, von der Rückseite der ersten Kolbenscheibe und der Vorderseite der zweiten Kolbenscheibe umgrenzten Aussparung arretiert ist. Bislang stellte die Verankerung der in aller Regel einen geringen Durchmesser aufweisenden Verschlußnadel am Kolben immer ein gewisses Problem dar. Aufgrund des geringen Durchmessers war das Verschrauben der Verschlußnadel relativ problematisch. Durch die Erfindung wird nun ein Formschluß durch einen zweiteiligen Kolben erreicht. Zwei axial aneinandergereihte Kolbenscheiben bilden dabei in ihrem Innem eine Aussparung, in der ein Befestigungskopf der Verschlußnadel arretiert ist Auch die Demontage und Montierung von Kolben und Verschlußnadel gestaltet sich jedoch relativ einfach, da durch Aneinanderfügen der beiden Kolbenscheiben eine automatische Arretierung der Verschlußnadel erfolgt. Ein versehentliches Lösen, wie es bei Gewindeverbindungen vorkommen könnte, ist unmögich. Darüber hinaus kann der Befestigungskopf äußerst klein ausfallen, so daß bei der Herstellung der Verschlußnadel nur geringer Werkstoffverlust auftritt.

Günstigerweise kann der Befestigungskopf im Querschnitt nicht rotationssymmetrisch sein und die erste Kolbenscheibe eine mittige, durchgehende Öffnung mit einer Querschnittsform derart aufweisen, daß der Befestigungskopf in einer vorbestimmten Verdrehwinkelstellung, um die Verschlußnadelachse gedreht, durch die Öffnung hindurchführbar ist. Es ist demnach nicht nötig, daß die gesamte Verschlußnadel durch die Öffnung hindurchführbar ist, wodurch eine Montage von der Vorderseite der ersten Kolbenscheibe möglich ist. Lediglich der Befestigungskopf muß in die Öffnung hineingesteckt und anschließend verdreht werden, damit die Verschlußnadel nicht mehr herausziehbar ist. Die zweite Kolbenscheibe sorgt dann für die Arretierung des Kopfes in der gewünschten Stellung.

Hierzu kann bevorzugterweise in der Vorderseite der zweiten Kolbenscheibe die Aussparung mit einer Querschnittsform derart angeordnet sein, daß der Befestigungskopf in einer anderen vorbestimmten Verdrehstellung, um die Verschlußnadelachse gedreht, in die Aussparung einsteckbar ist, wobei der Befestigungskopf in dieser anderen Verdrehstellung an der Rückseite der ersten Kolbenscheibe anliegt Die erste und zweite Kolbenscheibe können über eine geeignete Einrichtung, z.B. durch eine Verstiftung, zueinander eine genaue Lage einnehmen. Die Öffnung und die Aussparung weisen eine entsprechende Winkelstellung zueinander auf. Die Montage der Verschlußnadel erfolgt durch Einstecken des Befestigungskopfes in die Öffnung in einer bestimmten Winkelstellung, Verdrehen der Verschlußnadel und Anbringen der zweiten Kolbenscheibe, so daß der Befestigungskopf in der Aussparung zu liegen kommt. Hierdurch ist dann die Verschlußnadel sicher an dem zweiteiligen Kolben gehalten.

Eine äußerst günstige Ausführungsform sieht vor, daß der Befestigungskopf als Hammerkopf ausgebildet ist, der einen rotationssymmetrischen Schaftbereich umfaßt, der eine Länge aufweist, die im wesentlichen der Dicke der ersten Kolbenscheibe entspricht und einen Durchmesser aufweist, der im wesentlichen der Breite der als Langloch ausgebildeten Öffnung der ersten Kolbenscheibe entspricht, und einen Hammerabschnitt umfaßt, der eine Länge aufweist, die größer ist als die Breite der Öffnung der ersten Kolbenscheibe und eine Breite aufweist, die kleiner ist als die Breite der Öffnung in der ersten Kolbenscheibe, wobei die Aussparung in der Vorderseite der zweiten Kolbenscheibe eine Breite aufweist, die ein paßgenaues Einsetzen des Hammerbereichs ermöglicht. Die Aussparung sorgt somit für ein verdrehsicheres Arretieren der Verschlußnadel. Dadurch, daß die Öffnung in der ersten Kolbenscheibe eine Breite aufweist, die dem Durchmesser des rotationssymmetrischen Schaftbereichs entspricht, kann, falls der Schaftbereich im Durchmesser kleiner ist, als ein angrenzender Bereich der Verschlußnadel, der Hammerbereich mit einer Länge ausgeführt werden, der dem Durchmesser des angrenzenden Bereichs der Verschlußnadel entspricht. Hierdurch läßt sich eine sehr kleine Ausgestaltung des Befestigungskopfes realisieren.

Um einen möglichst großen Querschnitt des Anschlußstückes zu erreichen, hat es sich als günstig herausgestellt, wenn der Querschnitt des mindestens einen Anschlußstükkes und des mindestens einen Durchbruchs im Kolben im wesentlichen eine Nierenform aufweist. Dieser ist dann relativ nah um die Öffnung für die Verschlußnadel im Düsenhalter positionierbar.

Um möglichst große Kunststoffmengen in den Düsenhalter einzuführen, können zwei symmetrisch zur mittig am Kolben angeordneten Verschlußnadel angeordnete Anschlußstücke am Düsenhalter und Durchbrüche im Kolben vorgesehen sein, wobei jedes Anschlußstück mit einem Zuführkanal und/oder Fluidkanal versehen ist. Hierdurch wird auch eine symmetrische Wärmeführung bereitgestellt, wodurch es nicht zu ungewollten und ungünstigen Wärmeverteilungen kommt. Es besteht durch eine solche Anordnung aber auch die Möglichkeit, zwei verschiedene Kunststoffmaterialien durch den Düsenhalter zu leiten. Diesem sind dann jeweils unterschiedliche Verteilerkanäle zugeordnet.

Im folgenden wird ein Ausführungsbeispiel der folgenden Erfindung anhand einer Zeichnung näher erläutert. Es zeigt.
- Fig. 1: ein Spritzgußwerkzeug mit einer geschnittenen Seitenansicht,
- Fig. 2: eine Rückseite des Düsenhalters aus Fig. 1 in einer perspektivischen Explosionsdarstellung,
- Fig. 3: den Kolben mit Verschlußnadel aus Fig. 1 in einer perspektivischen Darstellung,
- Fig. 4: eine Vorderseite einer ersten Kolbenscheibe des Kolbens aus Fig. 3,
- Fig. 5: die Kolbenscheibe aus Fig. 4 in einer geschnittenen Seitenansicht,
- Fig. 6: eine Vorderseite der zweiten Kolbenscheibe des Kolbens aus Fig. 3,
- Fig. 7: die zweite Kolbenscheibe aus Fig. 6 in einer geschnittenen Seitenansicht,
- Fig. 8: einen Befestigungskopf der Verschlußnadel in einer Seitenansicht,
- Fig. 9: den Befestigungskopf aus Fig. 8 in einer Vorderansicht und
- Fig. 10: den Kolben mit angebrachter Verschlußnadel in einer teilweise geschnittenen Seitenansicht

Das Spritzgußwerkzeug umfaßt einen Heißkanalverteilerblock 1 mit einem Hauptheißkanal 2 und von dem Heißkanal 2 abzweigende zur Seitenfläche 3 hin offene Verteilerkanäle 4. Der Heißkanalverteilerblock 1 weist eingebettete Heizelemente 5 auf, die für eine entsprechende Aufheizung des Blockes 1 sorgen. Der Heißkanalverteilerblock 1 ist zumindest auf der Kavitätenseite A von einer Kanalbalkenplatte 6 umgeben, die im Abstand zu diesem angeordnet ist, so daß sich ein Luftspalt 7 zwischen diesen befindet.

Die Kanalbalkenplatte 2 weist eine den Verteilerkanälen 4 zugeordnete, zylindrische Bohrung 8 mit Bohrungsstufe 9 auf. In die Bohrung 8 und Bohrungsstufe 9 ist von der Rückseite der Kanalbalkenplatte 6 her ein entsprechend angepaßter Düsenhalter 10 eingeschoben. Der Düsenhalter 10 weist einen entsprechend an die Bohrungsstufe 9 angepaßten zylindrischen Ansatz 11 auf, der an seinem Außenumfang Rippen 12 umfaßt, die mit der Innenfläche der Bohrungsstufe 9 in Berührung stehen. Die umlaufenden Ringrippen 12 sorgen für einen geringen Wärmeübergang vom Düsenhalter 10 zur Kanalbalkenplatte 6. In die Vorderseite 13 des Düsenhalters 10 ist eine Düsenspitze 14 eingeschraubt, so daß diese aus Verschleißgründen leicht austauschbar ist Der der Vorderseite 13 zugeordnete Bereich des Düsenhalters 10 ist in einem Bodenstück 15 gehalten, das ein der Düsenspitze 14 zugeordnetes Austrittsmundstück 16 aufweist. Auf dem zylindrischen, mittleren Bereich 17 des Düsenhalters ist ein Ringheizkörper 18 aufgeschoben, der für eine entsprechende Temperierung sorgt. Ein Durchbruch 19 in der Kanalbalkenplatte 6 dient zur Durchführung der Zuleitungen 20 für den Ringheizkörper. Bevor nun der nähere Aufbau des Düsenhalters 10 mit in diesen angeordneten Einbauten beschrieben wird, sei angemerkt, daß dem Heißkanalverteilerblock 1 mehrere Düsenhalter 10 zugeordnet werden können. Es besteht auch die Möglichkeit, jeweils zwei Düsenhalter 10 in Reihe Rücken an Rücken anzuordnen, wobei diese lediglich durch den Heißkanalverteilerblock 1 getrennt sind.

Der Düsenhalter 10 sitzt mit seiner Rückseite 21 auf der Seitenfläche 3 des Heißkanalverteilerblocks 1 auf. In dem zylindrischen Ansatz 11 ist eine zur Rückseite 21 hin offene, zylindrische Kolbenkammer 22 eingearbeitet. In der Kolbenkammer 22 befindet sich ein axial beweglicher Kolben 23, in dessen Mitte eine Verschlußnadel 24 angebracht ist, die im Düsenhalter 10 verschiebbar gehalten bzw. gelagert ist und sich in die Düsenspitze 14 und ggf. bis in das Austrittsmundstück 16 erstreckt. Die Verschlußnadel 24 ist im Querschnitt kreisförmig ausgestaltet und koaxial zum Düsenhalter 10 und zur Düsenspitze 14 sowie zum Kolben 23 angeordnet

Der Düsenhalter 10 weist zwei Zuführkanäle 25 auf, die sich seitlich zur Verschlußnadel 24 erstrecken und im Bereich der Düsenspitze 14 zusammentreffen und als gemeinsamer Zuführkanal 26 weitergeführt werden. Die Zuführkanäle 25 erstrecken sich bis zur Rückseite 21 des Düsenhalters 10 durch die Kolbenkammer 22, so daß sie mit den zugehörigen Verteilerkanälen 4 fluchten und in Verbindung stehen.

Der Düsenhalter 10 liegt über eine Axialdichtung 27 axial an der Kanalbalkenplatte 6 an und ist über Stifte 28 in seiner Verdrehwinkellage positioniert Diese Verbindung zusammen mit der Kanalbalkenplatte 6 drückt den Düsenhalter 6 fest auf den Heißkanalverteilerblock 1.

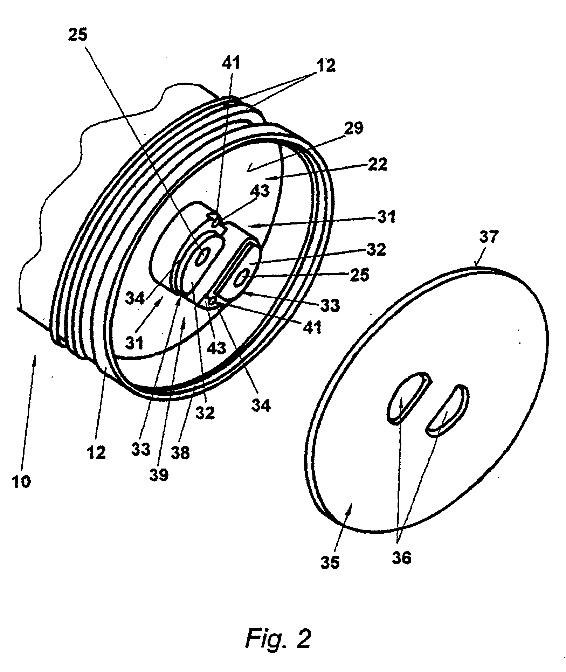

Anhand der Fig. 2 wird nun der Aufbau der Kolbenkammer 22 näher erläutert Die Kolbenkammer 22 ist im wesentlichen zylinderförmig und weist in der Mitte ihre Bodenseite 29 eine Nadelführungsöffnung zum Einstecken der Verschlußnadel 24 auf. Links und rechts neben der Nadelführungsöffnung 30 stehen von der Bodenseite 29 zwei nierenförmige Anschlußstücke 31 vor, die jeweils mit ihrer Stirnfläche 32 gegen den Heißkanalverteilerblock 1 drücken. Demnach weisen die Anschlußstücke 31 eine Höhe auf, die der Tiefe der Kolbenkammer 22 entspricht. In der Mitte der Anschlußstücke 31 erstreckt sich jeweils ein Zuführkanal 25, der dann bei montiertem Düsenhalter 10 jeweils mit einem Verteilerkanal 4 in Verbindung steht. Der freie Endbereich des Anschlußstückes 31 ist jeweils im Umfang reduziert, so daß ein Steckansatz 33 gebildet ist, der ebenfalls in etwa eine Nierenform aufweist. Die Höhe des Steckansatzes 33, die durch die Anschlagfläche 34 definiert ist, entspricht in etwa der Dicke einer kreisförmigen Isolierscheibe 35 aus einem hochtemperaturbeständigen Kunststoff, bevorzugt einem Polylmid. Die Isolierscheibe 35 weist zwei entsprechende nierenförmige Durchbrüche 36 auf, die paßgenau auf die Steckansätze 33 aufsteckbar sind. An ihrem Außenmantel 37 ist die Isolierscheibe 35 in einem Klemmabsatz 38 am Öffnungsende der Kolbenkammer 22 mit leichtem Preßsitz eingesetzt. Durch die Isolierscheibe 35 wird somit eine Abdekkung für die Kolbenkammer 22 erzeugt, so daß die heiße Seitenfläche 3 des Heißkanatverteilerblocks 1 nicht unmittelbar mit dem Innern der Kolbenkammer 22 in Verbindung steht. Diese hochtemperaturbeständige Isolierscheibe 35 weist eine Formbeständigkeit bei 2 MPa bis ca. 360°C auf. Sie übernimmt neben der Isolierwirkung bezüglich des Heißkanalverteilerblocks 1 auch eine Dichtungsfunktion. Sie sitzt daher auch stramm auf den Steckansätzen 33 auf.

Der Bodenseite 29 der Kolbenkammer 22 ist ein Luftkanal 39 zugeordnet, der an dieser Stelle in die Kolbenkammer 22 mündet. Der Luftkanal 39 ist mit einem Luftanschlußkanal 40 in der Kanalbalkenplatte 6 verbunden. Hierzu tritt der Luftkanal 39 seitlich zwischen zwei Stegen 12 aus dem Düsenhalter 10 aus und geht in den Luftanschlußkanal 40 über. Bevorzugt sind zwei dieser ersten Luftkanäle 39 diametral gegenüberliegend in dem Düsenhalter 10 angeordnet. Ein zweiter Luftkanal 41 tritt ebenfalls seitlich versetzt zum ersten Luftkanal 39 am Düsenhalter 14 auf der anderen Seite eines Steges 12 aus und steht mit einem zweiten Luftanschlußkanal 42 in der Kanalbalkenplatte 6 in Verbindung. Der zweite Luftkanal 41 verläuft erst parallel zum ersten Luftkanal 39 radial in den Düsenhalter 10 hinein und zweigt dann axial ab und verläuft innerhalb des Anschlußstückes 31 weiter. Es ist zu erkennen, daß auch zwei zweite Luftkanäle 41 vorgesehen sind, wobei jeweils einer dieser zweiten Luftkanäle 41 einem Anschlußstück 31 zugeordnet ist Damit die Austrittsöffnung der zweiten Luftkanäle 41 nicht von der Isolierscneibe 35 verschlossen wird, weist das Anschlußstück 31 im Bereich der Anschlagfläche 34 eine Hinterschneidungsstufe 43 auf, so daß die Luft frei aus diesem austreten kann.

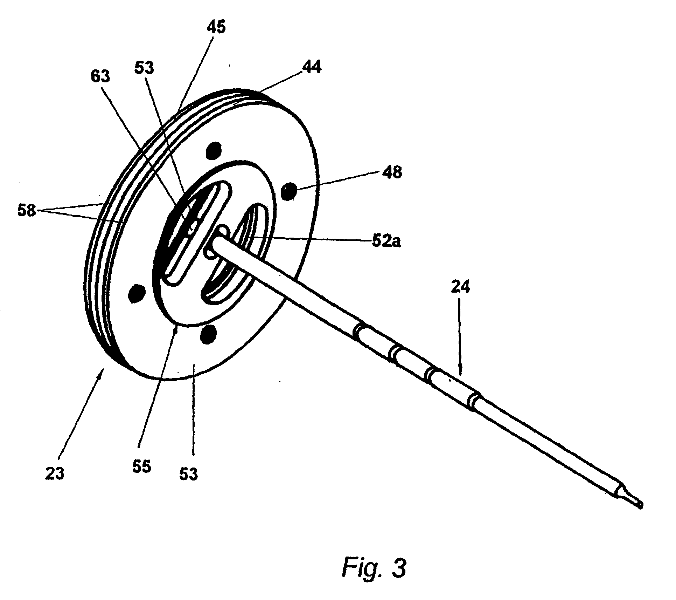

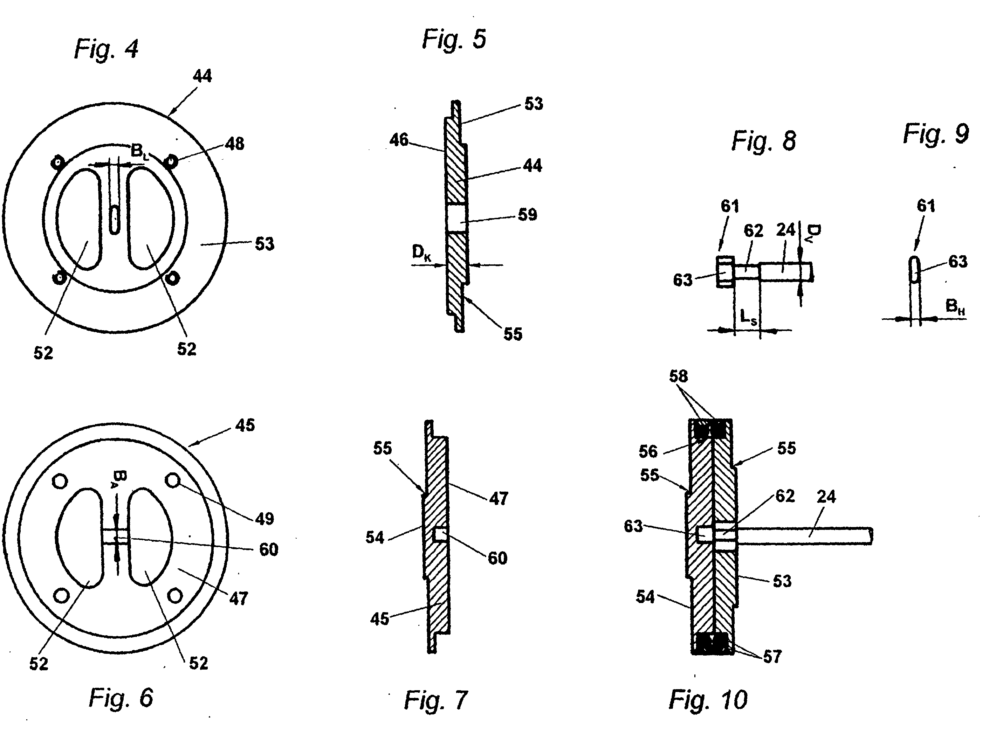

In der oben beschriebenen Kolbenkammer 22 befindet sich der in Fig. 3 dargestellte Kolben 23. Unter Zuhilfenahme der Fig. 4-10 wird nun der Aufbau des Kolbens 23 und dessen Verbindung mit der Verschlußnadel 24 näher beschrieben.

Der Kolben 23 ist zweiteilig aufgebaut und besteht aus einer ersten zylindrischen Kolbenscheibe 44 und einer zweiten zylindrischen Kolbenscheibe 45. Die beiden Kolbenscheiben 44,45 werden axial aneinandergefügt, so daß die Rückseite 46 der ersten Kolbenscheibe 44 und die Vorderseite 47 der zweiten Kolbenscheibe 45 bündig aneinanderliegen. Die Befestigung erfolgt mittels Gewindebohrungen 48 in der ersten Kolbenscheibe 44, Kegelsenkbohrungen 49 in der zweiten Kolbenscheibe 45 und Senkschrauben 50 sowie Stiften 51, die für eine genaue Winkellage der beiden Kolbenscheiben zueinander sorgen . Die beiden Kolbenscheiben 44, 45 weisen jeweils an die Auβenkontur der Anschlußstücke 31 angepaßte nierenförmige Durchbrüche 52 auf, so daß der Kolben 23 auf den Anschlußstücken 31 axial verschiebbar ist. In der zweiten Kolbenscheibe 45 befindet sich im Durchbruch 52 ein entsprechend angeformter Dichtungsring 52a, der eine Luftleckageströmung von der Vorderseite 53 des Kolbens 23 zur Rückseite 54 des Kolbens 23 verhindern soll. Die Vorderseite 53 und die Rückseite 54 weisen jeweils Hinterschneidungen 55 auf, so daß immer ein Freiraum verbleibt, wenn der Kolben 23 in seine Endstellungen fährt, d.h. mit der Bodenseite 29 oder der Isolierscheibe 35 in Berührung steht. Die Hinterschneidungen 55 sind so gewählt, daß in diesem Bereich jeweils die Luftkanäle 39 und 41 münden, so daß eine ausreichende Kraft zum Anfahren des Kolbens 23 erzeugbar ist Die beiden Kolbenscheiben 44, 45 bilden im zusammengefügten Zustand eine umlaufende Ringnut 56, in der zwei jeweils durch Ohrringe 57 gestützte Gleitringe 58 angeordnet sind, die an der zylindrischen Innenfläche der Kolbenkammer 22 entlanggleiten. Die Gleitringe 58 vermindern den Verschleiß und verhindern eine Lekackeströmung und müssen für den entsprechenden Anwendungszweck wärmebeständig sein.

Die erste Kolbenscheibe 54 weist in ihrer Mitte ein Langloch 59 auf, das parallel zur Längserstreckung der nierenförmigen Durchbrüche 52 verläuft. Die zweite Kolbenscheibe 45 weist eine nichtdurchgehende Längsaussparung 60 auf, die senkrecht zum Langloch 59 verläuft.

Die Verschlußnadel 24 umfaßt an ihrem Befestigungsende einen Befestigungskopf 61, der einen zylindrischen Schaftbereich 62 und einen Hammerbereich 63 aufweist. Der zylindrische Schaftbereich 62 weist eine axiale Länge Lₛ auf, die gleich bzw. geringfügig größer ist wie bzw. als die Dicke Dₖ der Kolbenscheibe 44 bzw. als die Länge des Langlochs 59. Der Hammerbereich 63, dessen Länge größer ist als die Breite B_{H} ist in einer bestimmten Winkelstellung durch das Langloch 59 hindurchführbar. Hierzu ist die Breite B_{L} des Langloches 59 gleich bzw. geringfügig größer als die Breite B_{H} des Hammerbereiches 63. Wird die Verschlußnadel 24 mit ihrem Hammerbereich 63 in die erste Kolbenscheibe 44 eingeführt, so kann dieser soweit angeschoben werden, bis sich der Schaftbereich 62 vollständig in dem Langloch 59 befindet Der sich daran anschließende Durchmesser Dᵥ der Verschlußnadel ist größer als die Breite B_{L} des Langloches 59, so daß dieser als Anschlag dient. Durch anschließendes Verdrehen der Verschlußnadel 24 hintergreift der Hammerbereich 63 die erste Kolbenscheibe 44. Anschließend wird unter Zwischenfügung der O-Ringe und Gleitringe 58 die zweite Kolbenscheibe 45 aufgesetzt und befestigt, wobei der Hammerbereich 63 eine solche Winkellage aufweist, daß er im wesentlichen paßgenau in die Aussparung 60 einführbar ist. Hierzu weist die Aussparung 60 eine Breite B_{A} auf, die geringfügig größer ist, als die Breite B_{H} des Hammerbereiches 63. Nach Verschraubung der beiden Kolbenscheiben 44 und 45 miteinander ist die Verschlußnadel 24 sicher am Kolben 23 arretiert. Durch entsprechendes Spiel an der Verbindungsstelle verbleibt die Verschlußnadel 24 leicht beweglich, so daß Fluchtungsfehler ausgleichbar sind.

Im folgenden wird die Wirkungs- und Funktionsweise des obenbeschriebenen Ausführungsbeispiels näher erläutert.

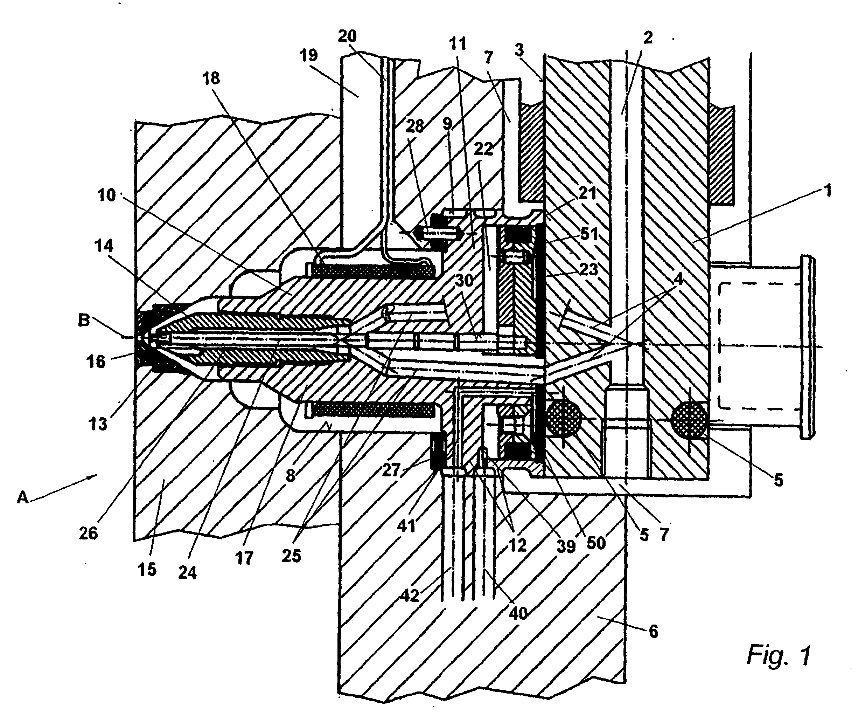

Flüssige Kunststoffmasse strömt durch den Heißkanalverteilerblock 1 im Heißkanal 2 und verteilt sich in die Verteilerkanäle 4. Diese stehen unmittelbar mit den Zuführkanälen 25 über die Anschlußstücke 31 in Verbindung. Die Kunststoffmasse strömt durch die Kolbenkammer 22 in den mittleren Bereich 17 des Düsenhalters 10 ein und wird dort wieder in einem gemeinsamen Zuführkanal 26 in der Düsenspitze 14 weitergeleitet Abhängig von der Stellung der Verschlußnadel 24 kann dann die Kunststoffmasse durch das Austrittsmundstück 16 in die Kavität bzw. Kavitäten gelangen. In der Fig. 1 ist die geöffnete Stellung der Verschlußnadel 24 dargestellt. Der Kolben 23 liegt dabei an der Isolierscheibe 35 an und Luft strömt über den Anschlußkanal 40 und den Luftkanal 39 in die Kolbenkammer 22, so daß eine Druckbeaufschlagung der Vorderseite 53 des Kolbens 23 gegeben ist.

Soll nun das Spritzgußwerkzeug verschlossen werden, indem die Düsennadel 24 in das Austrittsmundstück 16 einfährt, so wird der Luftanschluß 42 mit Druck beaufschlagt und der Luftanschluß 40 drucklos gemacht Über den Luftkanal 41 gelangt Druckluft über die Anschlußstücke 31 auf die Rückseite 54 des Kolbens 23 und bewegt diesen somit nach links (siehe Fig. 1). Die Isolierscheibe 35 sorgt dafür, daß eine weitestgehende Abschirmung der Kolbenkammer 22 stattfindet und die Wärme möglichst wenig Einfluß auf die Druckluft und die Funktion des Kolbens 23 nimmt.

Ein entscheidender Vorteil dieser Anordnung besteht in der Kompaktheit und in der Unterbringung des Kolbens 23 im Düsenhalter 10. Die Kunststoffschmelze wird dabei durch Durchbrüche 52 im Kolben selbst in den Düsenhalter 10 überführt. Dieser Aufbau ist relativ einfach strukturiert und läßt sich sehr schnell montieren und demontieren. Durch Abnehmen der Kanalbalkenplatte 6 erhält man automatisch unmittelbar freien Zugriff auf die Kolbeneinheit, was bislang im Stand der Technik nur durch weitere Demontageschritte möglich war. Die Bauhöhe bzw. Dicke des gesamten Werkzeuges reduziert sich daher beträchtlich. Ähnlich der Fig. 1 kann auch eine symmetrische Anordnung erfolgen, so daß auch auf der anderen Seite des Heißkanalverteilerblockes 1 eine entsprechende Kanalbalkenplatte 6 mit Düsenhalter 10 angeordnet werden kann. Die Einbringung entsprechender Zuführkanäle 4 in Heißkanalverteilerblock 1 gestaltet sich dabei sehr einfach. Es besteht auch die Möglichkeit, die beiden Anschlußstücke 31 zum Zuführen jeweils unterschiedlicher Kunststoffkomponenten zu verwenden.

## Patentansprüche

1. Spritzgußwerkzeug mit einem Heißkanalverteilerblock (1), mindestens einem auf dem Heißkanalverteilerblock (1) aufsitzenden Düsenhalter (10), einer im Düsenhalter (10) beweglich geführten Verschlußnadel (24) und einem in einer Kammer (22) angeordneten Antriebselement (23), das mit der Verschlußnadel (24) In Verbindung steht und diese in ihre verschiedenen Stellungen bewegt, wobei der Heißkanalverteilerblock (1) mindestens einen Verteilerkanal (4) aufweist, der Düsenhalter (10) mindestens einen der Verschlußnadel (24) zugeordneten Zuführkanal (25, 26) aufweist, der mindestens eine Verteilerkanal (4) mit dem mindestens einen Zuführkanal (25, 26) in Verbindung steht und die Kammer (22) in den Düsenhalter (10) derart integriert ist, daß das Antriebselement (23) zwischen der Verschlußnadel (24) und dem Heißkanalverteilerblock (1) angeordnet ist,
**dadurch gekennzeichnet, daß** das Antriebselement (23) ein fluidbetätigbarer Kolben ist, der in der Kammer (22) angeordnet ist, und daß zwischen dem Heißkanalverteilerblock (1) und der Kolbenkammer (22) eine hochtemperaturbeständige Isollerscheibe (35) angeordnet ist, die die Oberfläche (3) des Heißkanalverteilerblocks (1) zur Kolbenkammer (22) hin abdeckt.

2. Spritzgußwerkzeug nach Anspruch 1, **dadurch gekennzeichnet, daß** der Düsenhalter (10) einen Rückseitenbereich (21) aufweist, mit dem er auf dem Heißkanalverteilerblock (1) aufsitzt, die Kolbenkammer (22) an dem Rückseitenbereich (21) des Düsenhalters (10) offen ist, und die Kolbenkammer (22) am Rückseitenbereich (21) im wesentlichen durch den Heißkanalverteilerblock (1) verschlossen ist.

3. Spritzgußwerkzeug nach Anspruch 1 oder 2, **dadurch gekennzeichnet, daß** sich der mindestens eine Zuführkanal (25, 26) durch die Kolbenkammer (22) und den Kolben (23) erstreckt, wobei der Kolben (23) mindestens einen entsprechenden Durchbruch (52) aufweist.

4. Spritzgußwerkzeug nach einem der vorangegangenen Ansprüche, **dadurch gekennzeichnet, daß** versetzt zur Verschlußnadel (24) mindestens ein dickwandiges, mit dem Düsenhalter (10) verbundenes Anschlußstück (31), im wesentlichen achsparallel in die Kolbenkammer (22) hineinragt, daß der Zuführkanal (25, 26) durch das Anschlußstück (31) verläuft, und das Anschlußstück (31) eine Stirnseite (32) aufweist, mit der es mit dem Heißkanalverteilerblock (1) derart in Verbindung steht, daß der Zuführkanal (25, 26) mit dem Verteilerkanal (4) verbunden ist.

5. Spritzgußwerkzeug nach einem der vorangegangenen Ansprüche, **dadurch gekennzeichnet, daß** der mindestens eine entsprechende Durchbruch (52) im Kofben (23) formschlüssig an die Außenkontur des Anschlußstückes (31) derart angepaßt ist, daß der Kolben (23) auf dem Anschlußstück (31) gleitet.

6. Spritzgußwerkzeug nach einem der vorangegangenen Ansprüche,
**dadurch gekennzeichnet, daß** die Isolierscheibe (35) aus einem hochtemperaturbeständigen Kunststoff besteht.

7. Spritzgußwerkzeug nach einem der vorangegangenen Ansprüche, **dadurch gekennzeichnet, daß** die Isolierscheibe (35) an ihrem Außenumfang (37) bündig in einer Ausformung (38) des Düsenhalters (10) aufgenommen ist und mindestens einen formgenauen Durchbruch (36) für das mindestens eine Anschlußstück (31) aufweist.

8. Spritzgußwentzeug nach einem der vorangegangenen Ansprüche, **dadurch gekennzeichnet, daß** die Isolierscheibe (35) aus einem Polyimid besteht, das bevorzugt eine Formbeständigkeit bei 2 MPa bis ca. 360°C aufweist.

9. Spritzgußwerkzeug nach einem der vorangegangenen Ansprüche, **dadurch gekennzeichnet, daß** das mindestens eine Anschlußstück (31) an seinem Stimseitenbereich (32) im Umfang reduziert ist und dieser reduzierte Umfangsbereich als Steckansatz (33) zum formgenauen Einstecken in den mindestens einen Durchbruch (36) der Isolierscheibe (35) ausgebildet ist, wobei der Steckansatz (33) zum restlichen Anschlußstück (31) eine Anschlagkante (34) für die Isolierscheibe (35) bildet.

10. Spritzgußwerkzeug nach einem der vorangegangenen Ansprüche, **dadurch gekennzeichnet, daß** der Kolben (23) eine Vorder- und eine Rückseite (53, 54) aufweist und daß in dem Düsenhalter (10) Fluidkanäle (39, 41) angeordnet sind, wobei mindestens ein Fluidkanal (41) derart in die Kolbenkammer (22) mündet, daß er der Rückseite (54) des Kolbens (23) zugeordnet ist, und mindestens ein Fluidkanal (39) derart in die Kolbenkammer (22) mündet, daß er der Vorderseite (53) des Kolbens (23) zugeordnet ist.

11. Spritzgußwerkzeug nach einem der vorangegangenen Ansprüche, **dadurch gekennzeichnet, daß** ein Fluidanschluß (40, 42) an dem Düsenhalter (10) im Abstand zu dem Heißkanalverteilerblock (1) angeordnet ist und der mindestens eine Fluidkanal (41) der der Rückseite (54) des Kolbens (23) zugeordnet ist, sich durch das Anschlußstück (31) erstreckt.

12. Spritzgußwerkzeug nach einem der vorangegangenen Ansprüche, **dadurch gekennzeichnet, daß** der mindestens eine Fluidkanal (41), der der Rückseite (54) des Kolbens (23) zugeordnet ist, im Bereich der Anschlagkante (34) für die Isolierscheibe (35) in der Kolbenkammer (22) mündet, wobei die Anschlagkante (34) in diesem Bereich eine Hinterschneidung (43) für einen durch die Isolierscheibe (35) ungehinderten Austritt oder Eintritt des Fluids aufweist.

13. Spritzgußwerkzeug nach einem der vorangegangenen Ansprüche, **dadurch gekennzeichnet, daß** der Kolben (23) ein zylindrischer Pneumatikkolben ist.

14. Spritzgußwerkzeug nach einem der vorangegangenen Ansprüche, **dadurch gekennzeichnet, daß** der Kolben (23) an seinem Außenumfang mindestens einen wärmebeständigen Gleitring (58) aufweist, der mit der Gleitfläche der Kolben- ' kammer (22) in Berührung steht

15. Spritzgußwerkzeug nach einem der vorangegangenen Ansprüche, **dadurch gekennzeichnet, daß** die Vorderseite (53) und die Rückseite (54) des Kolbens (23) jeweils zurückversetzte Bereiche (55) aufweisen, die derart angeordnet sind, daß die Fluidkanäle (39, 41) im Bereich der zurückversetzten Bereiche (55) in die Kolbenkammer (22) münden.

16. Spritzgußwerkzeug, insbesondere nach einem der vorangegangenen Ansprüche, **dadurch gekennzeichnet, daß** der Kolben (23) aus zwei miteinander verbundenen Kolbenscheiben (44, 45) gebildet ist und die Verschlußnadel (24) an dem Ende, das dem Kolben (23) zugeordnet ist, einen Befestigungskopf (61) aufweist, der an einer Rückseite (46) der ersten Kolbenscheibe (44) anliegt und durch eine Vorderseite (47) der zweiten Kolbenscheibe (45) in einer im Innern des Kolbens (23) angeordneten, von der Rückseite (46) der ersten Kolbenscheibe (44) und der Vorderseite (47) der zweiten Kolbenscheibe (45) umgrenzten Aussparung (60) arretiert ist.

17. Spritzgußwerkzeug nach einem der vorangegangenen Ansprüche, **dadurch gekennzeichnet, daß** der Befestigungskopf (61) im Querschnitt nicht rotationssymmetrisch ist und die erste Kolbenscheibe (44) eine mittige, durchgehende Öffnung (59) mit einer Querschnittsform derart aufweist, daß der Befestigungskopf (61) in einer vorbestimmten Verdrehwinkelstellung, um die Verschlußnadelachse (B) gedreht, durch die Öffnung (59) hindurchführbar ist

18. Spritzgußwerkzeug nach einem der vorangegangenen Ansprüche, **dadurch gekennzeichnet, daß** in der Vorderseite (47) der zweiten Kolbenscheibe (45) die Aussparung (60) mit einer Querschnittsform derart angeordnet ist, daß der Befestigungskopf (61) in einer anderen vorbestimmten Verdrehstellung, um die Verschlußnadelachse (B) gedreht, in die Aussparung (60) einsteckbar ist, wobei der Befestigungskopf (61) in der anderen Verdrehstellung an der Rückseite (46) der ersten Kolbenscheibe (44) anliegt.

19. Spritzgußwerkzeug nach einem der vorangegangenen Ansprüche, **dadurch gekennzeichnet, daß** der Befestigungskopf (61) als Hammerkopf ausgebildet ist, der einen rotationssymmetrischen Schaftbereich (62) umfaßt, der eine Länge (Lₛ) aufweist, die im wesentlichen der Dicke (Dₖ) der ersten Kolbenscheibe (44) entspricht, und einen Durchmesser aufweist, der im wesentlichen der Breite (B_{L}), der als Langloch (59) ausgebildeten Öffnung in der ersten Kolbenscheibe (44) entspricht, und einen Hammerabschnitt (63) umfaßt, der eine Länge aufweist, die größer ist als die Breite (B_{L}) der Öffnung (59) in der ersten Kolbenscheibe (44), und eine Breite (B_{H}) aufweist, die kleiner ist als die Breite (B_{L}) der Öffnung (59) in der ersten Kolbenscheibe (44), wobei die Aussparung (60) in der Vorderseite (47) der zweiten Kolbenscheibe (45) eine Breite (B_{A}) aufweist, die ein paßgenaues Einsetzen des Hammerbereiches (63) ermöglicht

20. Spritzgußwerkzeug nach einem der vorangegangenen Ansprüche, **dadurch ge**kennzelchnet, daß der Querschnitt des mindestens einen Anschlußstücks (31) und des mindestens einen Durchbruchs (52) im Kolben (23) im wesentlichen eine Nierenform aufweist.

21. Spritzgußwerkzeug nach einem der vorangegangenen Ansprüche, **dadurch gekennzeichnet, daß** zwei symmetrisch zur mittig am Kolben (23) angeordneten Verschlußnadel (24) angeordnete Anschlußstücke (31) am Düsenhalter (10) und Durchbrüche (52) im Kolben (23) vorgesehen sind, wobei jedes Anschlußstück (31) mit einem Zuführkanal (25, 26) und/oder Fluidkanal (41) versehen ist.

## Claims

1. Injection mould with a hot runner manifold block (1), at least one nozzle holder (10) mounted on the hot runner manifold block (1), a sealing needle (24) movably guided in the nozzle holder (10) and a driving element (23) positioned in a chamber (22), the driving element being in touch with the sealing needle (24) and moving it to its various positions, whereby the hot runner manifold block (1) has at least one manifold runner (4), the nozzle holder (10) comprises at least one feed runner (25, 26), which is assigned to the sealing needle (24), the at least one manifold runner (4) is in touch with the at least one feed runner (25, 26) and the chamber (22) is integrated in the nozzle holder (10) in such a way, that the driving element (23) is positioned between the sealing needle (24) and the hot runner manifold block (1),
**characterized in that** the driving element (23) is a piston, movable by fluid, positioned in the chamber (22) and that between the hot runner manifold block (1) and the piston chamber (22) a high temperature resistant insulating disk (35) is arranged, which covers the surface (3) of the hot runner manifold block (1) towards the piston chamber (22).

2. Injection mould according to claim 1,
**characterized in that** the nozzle holder (10) comprises a rear side region (21), with which it is in contact with the hot runner manifold block (1), the piston chamber (22) is open at the rear side region (21) of the nozzle holder (10) and the piston chamber (22) is essentially closed in the rear side region (21) by the hot runner manifold block (1).

3. Injection mould according to claim 1 or 2,
**characterized in that** the at least one feed runner (25, 26) extends itself through the piston chamber (22) and the piston (23), whereby the piston (23) has at least one corresponding penetration (52).

4. Injection mould according to one of the preceding claims,
**characterized in that**, displaced to the sealing needle (24), at least one thick-walled adapter (31), connected with the nozzle holder (10), essentially projects axial parallel into the piston chamber (22), that the feed runner (25, 26) proceeds through the adapter (31) and the adapter (31) has a front face (32) with which it is in touch with the hot runner manifold block (1) in such a way, that the feed runner (25, 26) is connected with the manifold runner (4).

5. Injection mould according to one of the preceding claims,
**characterized in that** the at least one corresponding penetration (52) in the piston (23) is adapted form-fit to the outer contour of the adapter (31) in such a way, that the piston (23) slides onto the adapter (31).

6. Injection mould according to one of the preceding claims,
**characterized in that** the insulating disk (35) consists of high temperature resistant plastic.

7. Injection mould according to one of the preceding claims,
**characterized in that** the insulating disk (35) is at its outer contour flushly (37) located in a seat (38) of the nozzle holder (10) and comprises at least one penetration (36), precise in form, for the at least one adapter (31).

8. Injection mould according to one of the preceding claims,
**characterized in that** the insulating disk (35) consists of a polyamide, which comprises preferably a deformation resistance at 2 MPa up to approximately 360°C.

9. Injection mould according to one of the preceding claims,
**characterized in that** the at least one adapter (31) is reduced at its front side region (32) in its perimeter and this reduced perimeter segment is formed as a plug extension (33) for precise insertion into the at least one penetration (36) of the insulating disk (35), whereby the plug extension (33) to the remaining adapter (31) constitutes a stop edge (34) for the insulating disk (35).

10. Injection mould according to one of the preceding claims,
**characterized in that** the piston (23) comprises a front and a rear side (53, 54) and that in the nozzle holder (10) fluid channels (39, 41) are arranged, whereby at least one fluid channel (41) leads in such a way to the piston chamber (22), that it is assigned to the rear (54) of the piston (23) and at least one fluid channel (39) leads in such a way to the piston chamber (22) that it is assigned to the front (53) of the piston (23).

11. Injection mould according to one of the preceding claims,
**characterized in that** a fluid connection (40, 42) is arranged at the nozzle holder (10) at a distance to the hot runner manifold block (1) and the at least one fluid channel (41), assigned to the rear (54) of the piston (23), extends through the adapter (31).

12. Injection mould according to one of the preceding claims,
**characterized in that** the at least one fluid channel (41), assigned to the rear of the piston (23), leads into the region of the stop edge (34) for the insulating disk (35) in the piston chamber (22), whereby the stop edge (34) comprises a recess (43) in this region for an outflow or inflow of the fluid, unhindered by the insulating disk (35).

13. Injection mould according to one of the preceding claims,
**characterized in that** the piston (23) is a cylindrical pneumatic piston.

14. Injection mould according to one of the preceding claims,
**characterized in that** the piston (23) comprises at its outer perimeter at least one heat resistant sliding ring (58) which is in contact with the sliding surface of the piston chamber (22).

15. Injection mould according to one of the preceding claims,
**characterized in that** the front (53) and the rear (54) of the piston (23) each comprise recessed regions (55) which are arranged in such a way that the fluid channels (39, 41) lead into the piston chamber (22) in the region of the recessed regions (55).

16. Injection mould, in particular according to one of the preceding claims,
**characterized in that** the piston (23) is formed out of two piston disks (44, 45) connected with each other, and the sealing needle (24) comprises at the end which is assigned to the piston (23) a fixing head (61) which abuts to a rear side (46) of the first piston disk (44) and, via a front side (47) of the second piston disk (45), is arrested in a clearance (60), arranged in the interior of the piston (23) and demarcated by the rear (46) of the first piston disk (44) and the front (47) of the second piston disk (45).

17. Injection mould according to one of the preceding claims,
**characterized in that** the fixing head (61) is not rotationally symmetric in its cross-section and the first piston disk (44) comprises a central, passing opening (59) with a cross-section form in such a way that the fixing head (61) in a predetermined, angular twisted position, turned around the axis (B) of the sealing needle, is guidable through the opening (59).

18. Injection mould according to one of the preceding claims,
**characterized in that** in the front (47) of the second piston disk (45) the clearance (60) with a cross-section form is arranged in such a way, that the fixing head (61) is pocketable in the clearance (60) in another predetermined twisted position, turned around the axis (B) of the sealing needle, whereby the fixing head (61) in the other twisted position abuts to the rear (46) of the first piston disk (44).

19. Injection mould according to one of the preceding claims,
**characterized in that** the fixing head (61) is formed as a tee bolt which comprises a region of the shaft (62), which has a length (Ls) which corresponds essentially to the thickness (D_{K}) of the first piston disk (44) and has a diameter, which essentially corresponds to the width (B_{L}) of the opening in the first piston disk (44), formed as a slotted hole (59) and comprises a tee bolt zone (63), which has a length which is bigger than the width (B_{L}) of the opening (59) in the first piston disk (44) and has a width (B_{H}), which is smaller than the width (B_{L}) of the opening (59) in the first piston disk (44), whereby the clearance (60) in the front (47) of the second piston disk (45) has a width (B_{A}), which makes a precisely fitting insertion of the tee bolt zone (63) possible.

20. Injection mould according to one of the preceding claims,
**characterized in that** the cross-section of the at least one adapter (31) and the at least one opening (52) in the piston (23) essentially comprises a reniform.

21. Injection mould according to one of the preceding claims,
**characterized in that**, positioned symmetrically to the sealing needle (24), positioned centrically at the piston (23), two adapters (31) are provided at the nozzle holder (10) and openings (52) are provided in the piston (23), whereby each adapter (31) is supplied with a feed runner (25, 26) and/or a fluid channel (41).

## Revendications

1. Moule d'injection avec un bloc de distribution à canaux chauffants (1), au moins un porte-injecteur (10), reposant sur le bloc de distribution à canaux chauffants (1), un pointeau de fermeture (24), guidé mobilement dans le porte-injecteur (10) et un élément de commande (23), disposé dans un compartiment (22), l'élément de commande (23) étant en contact avec le pointeau de fermeture (24) qu'il meut dans ses positions diverses, et de plus le bloc de distribution à canaux chauffants (1) comprend au moins un canal distributeur (4), le porte-injecteur (10) comprend au moins un canal d'alimentation (25, 26), appartenant au pointeau de fermeture (24), le canal distributeur (4), au moins un, communique avec le canal d'alimentation (25, 26), aux moins un, et le compartiment (22) est intégré dans le porte-injecteur (10) de telle manière que l'élément de commande (23) est disposé entre le pointeau de fermeture (24) et le bloc de distribution à canaux chauffants (1),
**caractérisé en ce que** l'élément de commande (23) est un piston pouvant être actionné par fluide, et étant disposé dans le compartiment (22) et qu'entre le bloc de distribution à canaux chauffants (1) et le compartiment du piston (22) est disposé une rondelle isolante (35), résistant aux températures élevées, et couvrant la surface du bloc de distribution à canaux chauffants (1) vers le compartiment (22) du piston.

2. Moule d'injection selon revendication 1,
**caractérisé en ce que** le porte-injecteur (10) comprend une zone postérieure (21), par laquelle il repose sur le bloc de distribution à canaux chauffants (1), le compartiment (22) du piston est ouvert à la zone postérieure (21) du porte-injecteur (10) et le compartiment (22) du piston est fermé essentiellement sur la zone postérieure (21) par le bloc de distribution à canaux chauffants (1).

3. Moule d'injection selon revendication 1 ou 2,
**caractérisé en ce que** le canal d'alimentation (25, 26), au moins un, s'étire à travers le compartiment (22) du piston et le piston (23), et en plus le piston (23) comprend au moins une trouée (52) correspondante.

4. Moule d'injection selon une des revendications précédentes,
**caractérisé en ce que**, décalée par rapport au pointeau de fermeture (24), au moins une pièce de raccordement (31) à parois épaisse, reliée au porte-injecteur (10) projette essentiellement de façon parallèle à l'axe dans le compartiment (22) du piston, que le canal d'alimentation (25, 26) passe par la pièce de raccordement (31) et que la pièce de raccordement (31) comprend un côté frontal (32) par lequel elle s'adapte au bloc de distribution à canaux chauffants (1) de telle manière que le canal d'alimentation (25, 26) est relié au canal distributeur (4).

5. Moule d'injection selon une des revendications précédentes,
**caractérisé en ce que** la trouée (52), au moins une correspondante dans le piston (23) est adaptée congrúment au contour extérieur de la pièce de raccordement (31) de telle manière que le piston (23) glisse sur la pièce de raccordement (31).

6. Moule d'injection selon une des revendications précédentes,
**caractérisé en ce que** la rondelle isolante (35) est en matière plastique résistante aux températures élevées.

7. Moule d'injection selon une des revendications précédentes,
**caractérisé en ce que** la rondelle isolante (35) est reçue sur son périmètre extérieur (37) en formant une surface plane dans une cavité (10) du porte-injecteur (10) et comprend aux moins une trouée (36) de forme précise pour la pièce de raccordement (31), au moins une.

8. Moule d'injection selon une des revendications précédentes,
**caractérisé en ce que** la rondelle isolante (35) est en polyamide qui restepréférentiellement indéformable par 2 Mpa jusqu'à environ 360° C.

9. Moule d'injection selon une des revendications précédentes,
**caractérisé en ce que** la pièce de raccordement (31), aux moins une, est reduite dans sa circonference sur sa zone de côté frontal (32) et que cette zone circonférentielle réduite est constituée comme saillie embrochable (33) pour l'insertion de forme précise dans la trouée (36), au moins une, de la rondelle isolante (35) et en plus la saillie embrochable (33) forme un bord d'arrêt (34) pour la rondelle isolante (35) vers la pièce de raccordement (31) restante.

10. Moule d'injection selon une des revendications précédentes ,
caractérisé en ce le piston (23) comprend une face avant (53) et une face arrière (54) et que des canaux de fluide (39, 41) sont disposés dans le porte-injecteur (10) et en plus au moins un canal fluidique (41) débouche dans le compartiment du piston (22) de telle manière qu'il est attaché à l'arrière (54) du piston (23) et au moins un canal de fluide (39) débouche dans dans le compartiment du piston (22) de telle manière qu'il est attaché à la face avant (53) du piston (23).

11. Moule d'injection selon une des revendications précédentes,
**caractérisé en ce qu'**un raccordement de fluide (40, 42) est disposé sur le porte-injecteur (10) à une certaine distance du bloc de distribution à canaux chauffants (1) et le canal fluidique (41), au moins un, qu'i est attaché à la face arriere (54) du piston (23), passe par la pièce de raccordement (31).

12. Moule d'injection selon une des revendications précédentes,
**caractérisé en ce que** le canal fluidique (41), au moins un, qui est attaché à la face arrière (54) du piston (23) débouche dans le compartiment du piston (22) dans la zone du bord d'arrêt (34) pour la rondelle isolante (35) et de plus le bord d'arrêt (34) comprend dans cette zone une gorge (43) pour une sortie ou entré du fluide sans résistance par la rondelle isolante (35).

13. Moule d'injection selon une des revendications précédentes,
**caractérisé en ce que** le piston (23) est un piston pneumatique zylindrique.

14. Moule d'injection selon une des revendications précédentes,
**caractérisé en ce que** le piston (23) comprend sur sa circonférence au moins unanneau de glissement (58), résistant à la chaleur, ledit est en contact avec le plan de glissement du compartiment du piston (22).

15. Moule d'injection selon une des revendications précédentes,
**caractérisé en ce que** la face avant (53) et la face arriere (54) du piston (23) comprennent respectivement des zones (55) décalées, lesdites sont disposées de telle manière que les canaux de fluide (39, 41) débouchent dans la zone des zones décalées (55) dans le compartiment du piston (22).

16. Moule d'injection en particulier selon une des revendications précédentes,
**caractérisé en ce que** le piston (23) est formé de deux disques piston (44, 45) reliées l'un à l'autre et que le pointeau de fermeture (24) à l'extrémité qui est attachée au piston (23) comprend une tête de fixation (61), ladite est ajustée à une face arriére (46) du premier disque piston (44) et est arrêtée par une face avant (47) du deuxième disque piston (45) dans un évidement (60), disposé dans l'intérieur du piston (23) et entouré par la face arrière (46) du premier disque piston (44) et par la face avant (47) du deuxième disque piston (45).

17. Moule d'injection selon une des revendications précédentes,
**caractérisé en ce que** la tête de fixation (61) n'est pas à symétrie de révolution rotative dans le profil transversal et que le premier disque piston (44) comprend une ouverture (59) en plein centre et traversante avec un profil transversal. de telle manière que la tête de fixation (61) est capable de passer à travers l'ouverture (59) dans une position de torsion d'angle prédéterminée, tournée autour de l'axe (B) du pointeau de fermeture.

18. Moule d'injection selon une des revendications précédentes,
**caractérisé en ce que** dans la face avant (47) du deuxième disque piston (45) l'évidement (60) est disposé avec un profil transversal de telle manière que la tête de fixation (61) est capable de s'enfoncer dans l'évidement (60) dans une autre position de torsion d'angle prédeterminée, tournée autour de l'axe (B) du pointeau de fermeture et en plus la tête de fixation (61) est ajustée sur la face arriere (46) du premier disque piston (44) dans l'autre position de torsion.

19. Moule d'injection selon une des revendications précédentes,
**caractérisé en ce que** la tête de fixation (61) est constituée comme une tête de marteau qui comprend une zone de tige (62) symétrique rotative, ladite comprend une longueur (Ls) qui correspond essentiellement à l'épaisseur (D_{K}) du premier disque piston (44) et comprend un diamètre qui correspond essentiellement à la largeur (B_{L}) de l'ouverture dans le premier disque piston (44), en forme de trou ovale (59), et qui comprend une zone de marteau (63) ladite est plus longue que la largeur (B_{L}) de l'ouverture (59) dans le premier disque piston (44) et moins large que la largeur (B_{L}) de l'ouverture (59) dans le premier disque piston (44) et en plus l'évidement (60) dans la face avant (47) du deuxième disque piston (45) est d'une largeur (B_{A}), qui rend possible une insertion de précision d'ajustage de la zone de marteau (63).

20. Moule d'injection selon une des revendications précédentes,
**caractérisé en ce que** la coupe transversale de la pièce de raccordement (31), au moins une, et de la trouée (52), au moins une, dans le piston (23) est essentiellement réniforme.

21. Moule d'injection selon une des revendications précédentes,
**caractérisé en ce que** deux pièces de raccordement (31), disposées symétriquement au pointeau de fermeture (24), celui-ci étant disposé en plein centre du piston (23), sont prévues sur le porte-injecteur (10) et que des trouées (52) sont prévues dans le piston (23) et en plus chaque pièce de raccordement (31) est munie d'un conduit d'alimentation (25, 26) et/ou d'un conduit fluidique (41).
